# EUROPEAN PATENT APPLICATION

(11) **EP 1 553 577 A1**
(43) Date of publication of application: **13.07.2005**
(21) Application number: 03808873.8
(22) Date of filing: 01.09.2003
(51) Int. Cl.: G11B 7/24, G11B 7/0045, G11B 7/005, G11B 7/26

(54) **INFORMATION RECORDING MEDIUM, PROCESS FOR PRODUCING THE SAME AND OPTICAL INFORMATION RECORDING AND REPRODUCING DEVICE**

(30) Priority: 16.10.2002 JP 2002301601
(71) Applicant: MATSUSHITA ELECTRIC INDUSTRIAL CO., LTD., Kadoma-shi, Osaka 571-8501 (JP)
(72) Inventor: SHIONO, Teruhiro, Osaka-shi, Osaka 547-0012 (JP); YAMAMOTO, Hiroaki, Kawabe-gun, Hyogo 666-0257 (JP); NISHINO, Seiji, Osaka-shi, Osaka 545-0035 (JP); MITSUYU, Tsuneo, Hirakata-shi, Osaka 573-1148 (JP); ITO, Tatsuo, Osaka-shi, Osaka 547-0024 (JP)
(74) Representative: Jeffrey, Philip Michael
(86) International application number: PCT/JP2003/011172
(87) International publication number: WO 2004/036569

(57) **Abstract**

An information recording medium of the present invention includes a recording portion capable of storing information three-dimensionally. The recording portion (3) includes at least one recording layer (1a to 1f), and the recording layer (1a to 1f) contains titanium oxide. It is preferable that titanium oxide is at least one kind of an anatase type and a brookite type.
The recording layer (1a to 1f) may be substantially made of titanium oxide, and may contain titanium oxide and a low refractive-index material having a refractive index smaller than that of titanium oxide.

## Description

### Technical Field

The present invention relates to an information recording medium and a method for producing the same, and an optical information recording and reproducing apparatus.

### Background Art

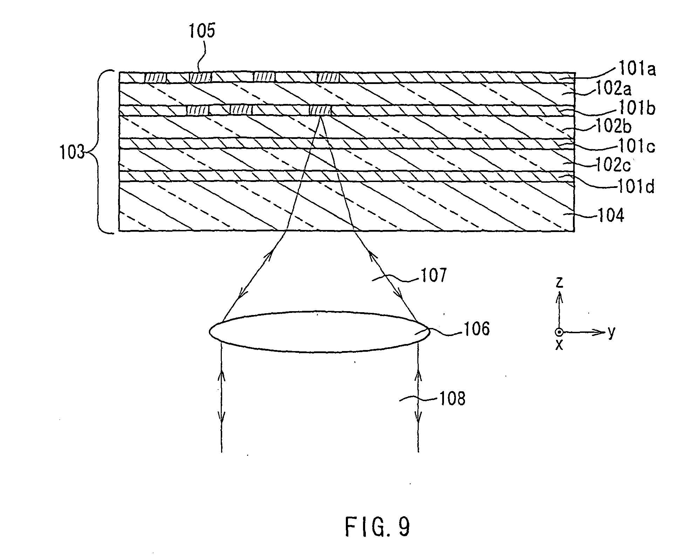

As an information recording medium capable of storing information three-dimensionally, conventionally, there is a recording medium shown in FIG. 9 (Yoshimasa Kawata et al.: "Three-dimensional optical memory using an organic multilayered medium", Optics Japan 2000, Extended Abstracts, p. 95-96, 7pB12 (2000)). This information recording medium has a configuration in which recording layers 101a to 101d made of a urethane-urea copolymer that is a photon mode recording material, and intermediate layers 102a to 102c made of a PVA (polyvinyl alcohol) film and a polymethylmethacrylate (PMMA) film are stacked alternately on a glass substrate 104.

Laser light 108 is condensed (converged light 107 radiates) onto a target recording layer among the recording layers 101a to 101d of the information recording medium by an objective lens 106, whereby information can be recorded. The laser light 108 used herein is pulse laser light with a pulse width of about 100 femtoseconds and a very high peak power. By condensing such pulse laser light onto the recording layers 101a to 101d, information can be recorded onto the recording layers 101a to 101d, using two-photon absorption, which is one of the non-linear absorption phenomena.

Specifically, in a portion (focal point) with a high power density of converged light among the regions of the recording layers 101a to 101d irradiated with the converged light 107, two-photon absorption occurs, and a phenomenon occurs in which light radiates as if light having a wavelength that is a half of the wavelength of the actually radiated light radiated, whereby an information bit 105 is written. By condensing light with a low power onto the information bit 105, and detecting the reflected light with a photodetector (not shown) via the objective lens 106, a signal can be reproduced. Since the information recording medium has a configuration in which a plurality of recording layers are stacked in an optical axis direction (z direction) of the objective lens, information can be recorded three-dimensionally to increase the recording capacity

However, there was a problem that in the above-mentioned conventional information recording medium, recording sensitivity of the recording layers was not high. Therefore, in the case of forming one information bit with one pulse, it is necessary to use a femtosecond laser with a very high peak power (about 100 kW) as a light source, which makes the configuration of a light source complicated. In the case of using a light source with a smaller peak power, it is necessary to repeat recording at the same place a number of times (e.g., tens of to thousands of times) (accumulation recording can be performed due to the use of a photon mode recording material), which decreases a recording speed.

### Disclosure of Invention

An information recording medium of the present invention includes a recording portion capable of storing information three-dimensionally, wherein the recording portion includes at least one recording layer, and the recording layer contains titanium oxide.

A method for producing an information recording medium is a method for producing an information recording medium including a recording portion capable of storing information three-dimensionally The recording portion includes at least one recording layer, and the recording layer contains titanium oxide. The method includes the step of forming the recording layer by coating of a coating solution containing titanium oxide.

An optical information recording and reproducing apparatus of the present invention is an optical information recording and reproducing apparatus for recording and reproducing information with respect to an information recording medium including a recording portion capable of storing information three-dimensionally. The recording portion includes at least one recording layer, and the recording layer contains titanium oxide. The apparatus includes: a light source for emitting recording light; a light source for emitting reproducing light; an objective lens for condensing light emitted from the light source for emitting the recording light and the light source for emitting the reproducing light onto the information recording medium; and a photodetector for detecting light reflected from the information recording medium. Information is recorded in the recording portion using a change in optical constant of the titanium oxide caused by a change in configuration of the titanium oxide, and the information is reproduced using the change in optical constant of the titanium oxide.

### Brief Description of Drawings

FIG. 1 is a view illustrating a cross-sectional configuration of an information recording medium and a state where information is recorded/reproduced in Embodiment 1 according to the present invention.
FIGS. 2A and 2B are graphs each showing a relationship between the thickness and the reflectance of a recording layer of the information recording medium in Embodiment 1 according to the present invention.
FIGS. 3A to 3D are cross-sectional views showing respective production steps of the information recording medium in Embodiment 1 according to the present invention.
FIG. 4 is a schematic view showing a configuration of an optical head of an optical information recording and reproducing apparatus in Embodiment 1 according to the present invention.
FIG. 5A is a view illustrating a cross-sectional configuration of an information recording medium and a state where information is recorded/reproduced in Embodiment 2 according to the present invention; and FIG. 5B is an enlarged view of a recording layer of the information recording medium shown in FIG. 5A.
FIG. 6 is a graph showing a relationship between the thickness and the reflectance of a recording layer of the information recording medium in Embodiment 2 according to the present invention.
FIG. 7A is a view illustrating a cross-sectional configuration of an information recording medium and a state where information is recorded/reproduced in Embodiment 3 according to the present invention; and FIG. 7B is an enlarged view of a recording layer of the information recording medium shown in FIG. 7A.
FIG. 8 is a graph showing relationships between the energy threshold value and the pulse width of laser light and between the peak power threshold value and the pulse width of laser light during one-bit recording in an information recording medium of an example according to the present invention.
FIG. 9 is a view illustrating a cross-sectional configuration of a conventional information recording medium and a state where a signal is recorded/reproduced.

### Best Mode for Carrying Out the Invention

In an information recording medium of an embodiment, a recording layer contains titanium oxide (TiO₂) that absorbs predetermined light to be changed in configuration. Therefore, unlike a conventional example, one information bit can be formed with one pulse even without using laser light having a very high peak power. Thus, according to the present embodiment, an information recording medium capable of performing high-speed recording with a high sensitivity can be provided.

In the information recording medium of the present embodiment, titanium oxide may be at least one kind of an amorphous form and a crystal form, and the crystal form may be at least kind selected from the group consisting of an anatase type, a brookite type, and a rutile type. In particular, it is preferable that titanium oxide is at least one kind selected from the group consisting of an anatase type and a brookite type, which has stability, high sensitivity, and a high speed, and can be changed in configuration to a rutile type.

In the information recording medium of the present embodiment, it is preferable that the recording layer is substantially made of titanium oxide (TiO₂). When the recording layer is substantially made of only titanium oxide, for example, compared with an information recording medium (described later) in which a recording layer contains titanium oxide and a low refractive-index material (resin, inorganic material, etc.) having a refractive index smaller than that of titanium oxide, the reflectance is higher and the reading light amount is larger, so that the quality of a reproduced signal is satisfactory. In the present specification, the recording layer being substantially made of titanium oxide means that the recording layer is made of only titanium oxide, except for impurities mixed unintentionally during formation of the recording layer. Specifically, it is preferable that the recording layer contains 90wt% or more of titanium oxide.

In the information recording medium of the present embodiment, it is preferable that the recording layer contains titanium oxide and a low refractive-index material with a refractive index smaller than that of titanium oxide. The reason for this is that, by controlling the content of titanium oxide contained in the recording layer, the reflectance can be decreased to a desired value. If the reflectance can be decreased to a desired value, in an information recording medium with a large number of recording layers (e.g., including 10 to 50 recording layers), the light loss per layer is decreased to approximate the amount of light that is incident upon each recording layer to each other.

In the information recording medium of the present embodiment, it is preferable that the recording layer contains 5wt% to less than 100wt% of the titanium oxide. The reason for this is that, by setting the content of titanium oxide in the recording layer to be 5wt% or more, the recording sensitivity can be enhanced to a practical level.

It is preferable that the titanium oxide is in a particle form, and an average particle size of the titanium oxide is shorter than a wavelength of recording light and a wavelength of reproducing light. The reason for this is that a light loss caused by a diffraction of recording light and reproducing light due to particles of titanium oxide can be suppressed. Furthermore, it is preferable that an average particle size of the titanium oxide is shorter than 1/4 of the wavelength of the recording light and the wavelength of the reproducing light. The reasons for this is as follows. A scattering loss as well as a diffraction loss can be suppressed, so that a light loss of recording light and reproducing light can be decreased. This also includes the case where a part of fine particles are aggregated, and particles (aggregates) having an apparent particle size longer than the wavelength of recording light and the wavelength of reproducing light are present. Even in the case where fine particles are aggregated, the apparent particle size preferably is shorter than the wavelength of recording light and the wavelength of reproducing light.

In the information recording medium of the present invention, it is preferable that the low refractive-index material is resin in the following points: it is easy to form a recording layer, and it is possible to enhance the sensitivity of recording and reproduction due to an insulation effect of resin. When the low refractive-index material is an inorganic material, the stability of the recording layer is enhanced, which is preferable for the following reason. The anatase-type or brookite-type titanium oxide has a photocatalytic function, so that an organic material may be decomposed by irradiation with UV-light, while an inorganic material is not decomposed.

Furthermore, the information recording medium of the present embodiment includes a plurality of the recording layers, wherein the recording portion further includes a plurality of intermediate layers that are substantially transparent to recording light and reproducing light, and the recording layers and the intermediate layers are stacked alternately to realize a multi-layered configuration.

Furthermore, it is preferable that the information recording medium of the present embodiment further includes a protective layer substantially transparent to recording light and reproducing light, wherein the protective layer is placed on a light incident side of the recording portion. The reason for this is that the recording portion can be protected from scratches, dust, and the like.

Furthermore, it is preferable that the information recording medium of the present embodiment further includes a protective layer substantially transparent to recording light and reproducing light, wherein the protective layer is placed on a light incident side of the recording portion, and made of the same material as that for the low refractive-index material contained in the recording layer. Furthermore, it is preferable that the recording layer contains the titanium oxide, and a low refractive-index material having a refractive index smaller than that of the titanium oxide, and the intermediate layer is made of the same material as that for the low refractive-index material. The reason for this is that, if the intermediate layer and the protective layer are made of the same material as that for the low refractive-index material contained in the recording layer, a problem caused by a chemical reaction, for example, erosion does not occur, and satisfactory interfaces can be formed between the intermediate layer and the recording layer, and between the protective layer and the recording layer.
Furthermore, the reason for this is that the cost of the information recording medium can be decreased. Herein, the same material means a material of the same kind, and for example, materials having different molecular weights due to a difference in polymerization degree are considered as the same materials.

In the information recording medium of the present embodiment, it is preferable that information is recorded in a part of the recording layer, and assuming that a wavelength of light for reproducing the recorded information is λ, a refractive index of a portion of the recording layer where the information is recorded is *n'*, and a refractive index of a portion of the recording layer where the information is not recorded is *n,* a thickness *L* of the recording layer satisfies relationships: λ/(2*n*) < *L* < 3λ/(4*n'*), or λ/*n* < *L* < 5λ/(4*n'*). The reason for this is that, when the thickness L of the recording layer satisfies the above-mentioned relationships, the contrast of a reflectance or modulation ratio are large, and the quality of a reproduced signal is enhanced.

According to the method for producing an information recording medium of the present embodiment, the information recording medium of the present invention can be produced easily at a low cost.

The method for producing an information recording medium of the present embodiment further includes the step of forming an intermediate layer by coating a coating solution made of a material substantially transparent to recording light and reproducing light, wherein the step of forming the recording layer and the step of forming the intermediate layer are repeated alternately in a predetermined order by a predetermined number. According to this method, an information recording medium with a multi-layered configuration including a plurality of recording layers and a plurality of intermediate layers can be produced easily at a low cost.

According to the optical information recording and reproducing apparatus of the present embodiment, information can be recorded and reproduced with respect to the information recording medium of the present invention.

In the optical information recording and reproducing apparatus of the present embodiment, it is preferable that the light source for emitting the recording light is a pulse laser light source, and a pulse width is 1 picosecond to 5 nanoseconds. Furthermore, it is preferable that a peak power of the light source for emitting the recording light is 2W to 300 W. The reason for this is that one information bit can be formed with one pulse with respect to the information recording medium of the present embodiment.

In the optical information recording and reproducing apparatus of the present embodiment, it is preferable that an information bit is formed in the recording portion of the information recording medium using a non-linear absorption phenomenon, and the non-linear phenomenon includes two-photon absorption or multi-photon absorption.

In the optical information recording and reproducing apparatus of the present embodiment, it is preferable that an information bit is recorded three-dimensionally in the recording portion of the information recording medium, in such an order not passing through an information bit recorded in the recording portion, and for example, it is preferable that an information bit is formed in the recording portion successively from a position farther away from an objective lens to a position close to the objective lens. The reason for this is that, by forming an information bit in such an order, stray light such as scattered light and unnecessary diffracted light, and the like influenced by the information bit can be reduced.

In the optical information recording and reproducing apparatus of the present embodiment, it is preferable that the light source for emitting the recording light and the light source for emitting the reproducing light are the same. The reason for this is that one light source suffices, whereby the configuration of the optical information recording and reproducing apparatus can be simplified.

In the optical information recording and reproducing apparatus of the present embodiment, it is preferable that a wavelength of the light source for emitting the reproducing light is 0.388 µm to 0.413 µm.

It is preferable that the change in configuration of the titanium oxide used for recording information onto an information recording medium with the optical information recording and reproducing apparatus of the present embodiment is a change from an anatase type or a brookite type to a rutile type. The change in configuration of the titanium oxide may be a change from an amorphous type to an anatase type, a brookite type, or a rutile type.

Hereinafter, embodiments of the present invention will be described with reference to the drawings.

### (Embodiment 1)

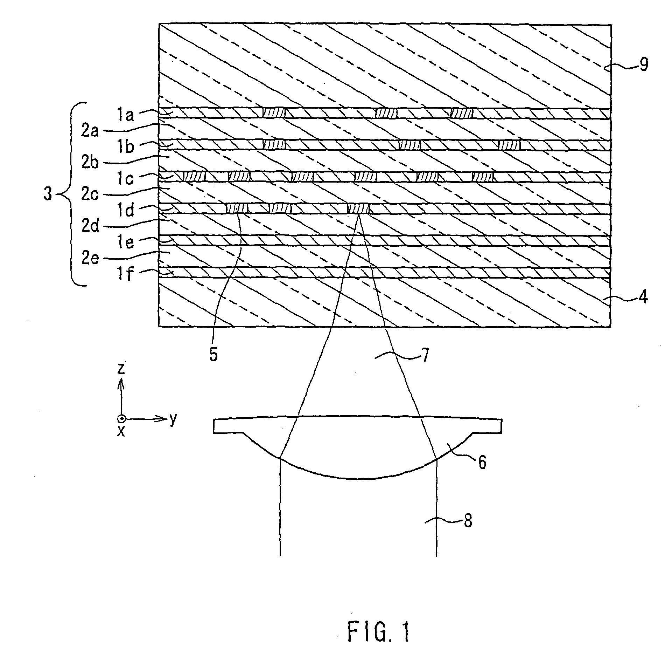

An information recording medium and a method for producing the same, and an optical information recording and reproducing apparatus of Embodiment 1 according to the present invention will be described with reference to FIGS. 1 to 4.

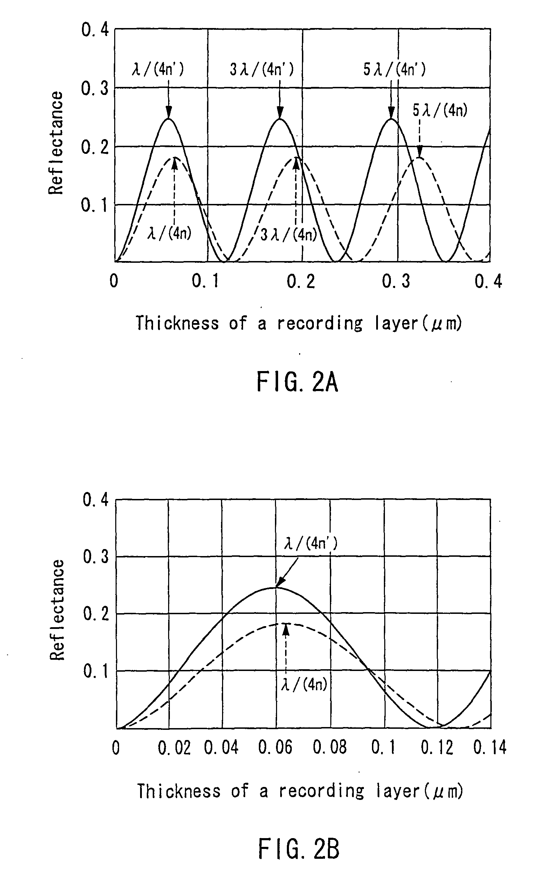

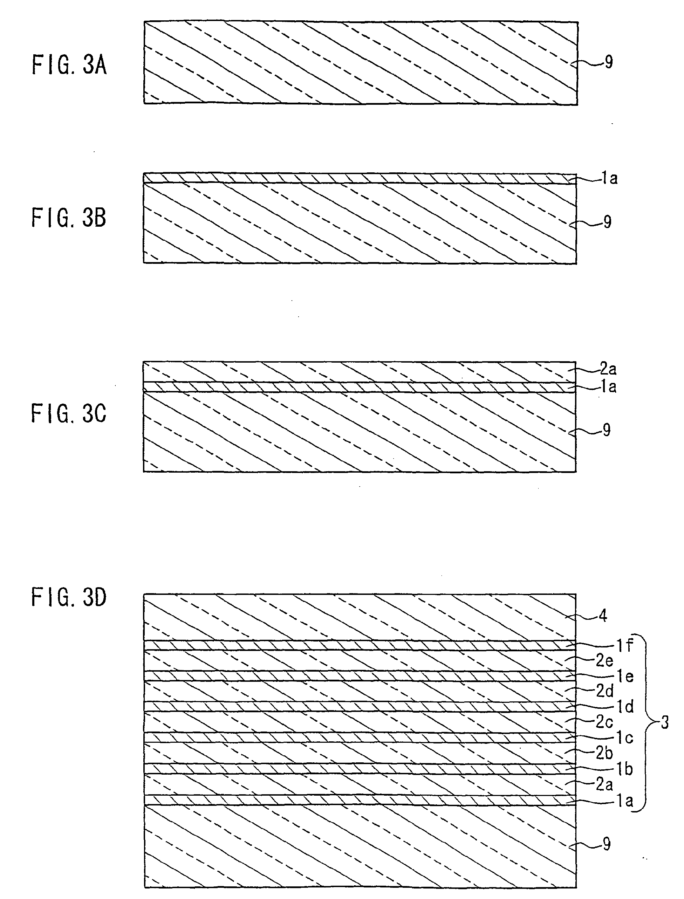

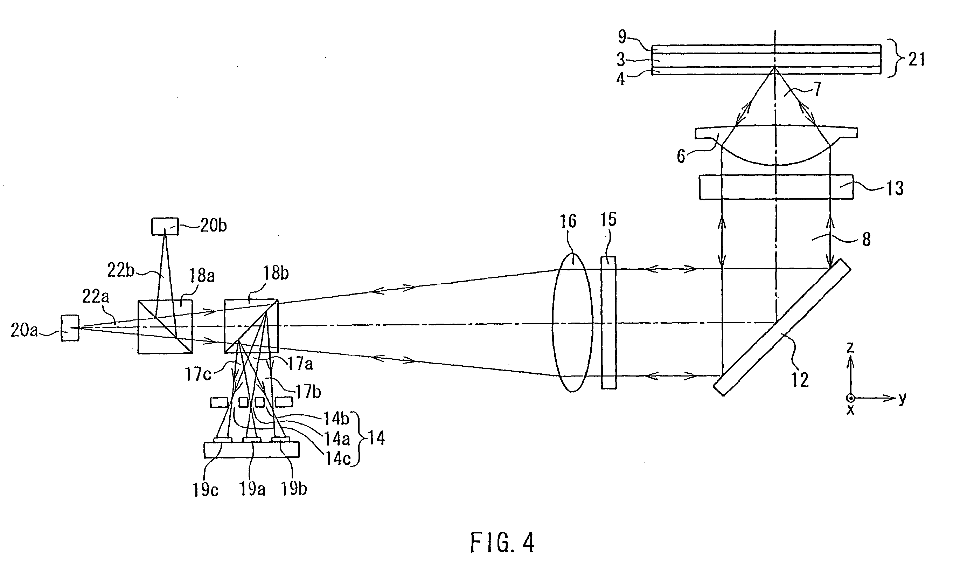

FIG. 1 shows a cross-sectional configuration of the information recording medium and a state where information is recorded and reproduced in the present embodiment. FIGS. 2A and 2B respectively show a relationship between the film thickness and the reflectance of a recording layer in the information recording medium in the present embodiment. FIG. 3 shows cross-sectional views of respective production steps of the information recording medium in the present embodiment. FIG. 4 shows a schematic configuration of an optical head of an optical information recording and reproducing apparatus in the present embodiment.

As shown in FIG. 1, in the information recording medium of the present embodiment, a recording portion 3 and a protective layer 4 are formed on a substrate 9. The recording portion 3 includes a plurality of recording layers 1a to 1f, and a plurality of intermediate layers 2a to 2e. The recording layers and the intermediate layers are stacked alternately. More specifically, in the recording portion 3, a recording layer 1a, an intermediate layer 2a, a recording layer 1b, ..., a recording layer 1e, an intermediate layer 2e, and a recording layer 1f are stacked in this order from a substrate 9 side. The information recording medium of the present embodiment includes a plurality of recording layers in the recording portion 3, whereby recording of information in a thickness direction can be performed, as well as recording of information in a planar direction. Hereinafter, an arbitrary recording layer among the recording layers 1a to 1f will be referred to as a recording layer 1, and an arbitrary intermediate layer among the intermediate layers 2a to 2e will be referred to as an intermediate layer 2.

As shown in FIG. 1, in the information recording medium of the present embodiment, the protective layer 4 is placed on a light incident side during recording and reproduction of information. During recording, laser light is condensed (converged light 7) onto any of the recording layers 1a to 1f by an objective lens 6 to form an information bit 5. During reproduction, the laser light 8 is condensed (converged light 7) onto a target layer among the recording layers 1a to 1f by the objective lens 6, whereby information is reproduced using light reflected from the information bit 5.

The information recording medium of the present embodiment is characterized in that the recording layer 1 contains titanium oxide (TiO₂). The inventors found that titanium oxide is changed in configuration by irradiation with laser light having a relatively low power, and obtained an information recording medium with respect to which information is recorded and reproduced using a change in optical constant involved in the change in configuration of titanium oxide.

In the information recording medium of the present embodiment, the recording layer 1 is substantially made of only titanium oxide (TiO₂). Therefore, for example, compared with an information recording medium (Embodiment 2) described later, in which a recording layer is made of titanium oxide and a low refractive-index material (resin, inorganic material, etc.) with a refractive index lower than that of titanium oxide, the information recording medium of the present embodiment has a smaller scattering loss or a diffraction loss of incident light, and a higher reflectance. More specifically, the information recording medium of the present embodiment is superior to Embodiment 2 in that a reading light amount is larger (light use efficiency is higher), and the quality of a reproduced signal is more satisfactory.

In the present specification, the recording layer being substantially made of titanium oxide means that the recording layer is made of only titanium oxide except for impurities mixed unintentionally during formation of the recording layer. More specifically, for example, it is preferable that the recording layer contains 90wt% or more of titanium oxide.

Titanium oxide may be at least one kind of an amorphous form and a crystal form, and the crystal form may be at least one kind selected from the group consisting of an anatase type, a brookite type, and a rutile type.

The substrate 9 can be made of, for example, polycarbonate, PMMA, norbornene resin (e.g., "Arton" (produced by JSR Co., Ltd.)), cycloolefin resin (e.g., "Zeonex" (produced by Nippon Zeon Co., Ltd.)), etc.

The intermediate layer 2 may be substantially transparent to recording light and reproducing light, and there is no particular limit to the material for the intermediate layer 2. For example, the intermediate layer 2 can be made of PMMA, photopolymer resin, UV-curable resin, polyester, or the like.

There is no particular limit to the material for the protective layer 4, as long as it is substantially transparent to recording light and reproducing light. For example, the protective layer 4 can be made of polycarbonate, PMMA, photopolymer resin, UV-curable resin, polyester, or the like. By providing the protective layer 4, the recording portion 3 can be protected from scratches, dust, and the like.

The intermediate layer 2 and the protective layer 4 being substantially transparent to recording light and reproducing light means that they transmit recording light and reproducing light except for a scattered component, substantially without absorbing them. More specifically, for example, the absorptivity per recording layer is preferably 1% or less, and more preferably 0.1% or less.

It is preferable that the protective layer 4 is made of substantially the same material as that for the intermediate layer 2. The reason for this is that the cost of the information recording medium can be decreased by selecting the same material. Herein, the same material means a material of the same kind, and for example, materials having different molecular weights due to a difference in polymerization degree are considered as the same materials.

In the information recording medium of the present embodiment, the thickness of the substrate 9 is, for example, 1.1 mm. The thicknesses of the recording layers 1a to 1f are, for example, 1 µm or less, respectively. The thicknesses of the intermediate layers 2a to 2e are, for example, about 3 µm to 5 µm, respectively. The thickness of the protective layer 4 is, for example, about 100 µm. All or any of the recording layers are provided with a track groove for tracking servo.

Next, recording of information with respect to the information recording medium of the present embodiment will be described.

When the recording layer 1 is irradiated with light having a wavelength shorter than an absorption edge wavelength (wavelength at which light absorption occurs as a result of a decrease in wavelength) of titanium oxide contained in the recording layer 1, titanium oxide absorbs light. When the recording layer reaches a predetermined temperature due to the heat generated by the light absorption, titanium oxide is changed in configuration, and the information bit 5 is formed on the recording layer 1 due to the change in optical constant involved in the change in configuration.

For example, when anatase-type titanium oxide (refractive index n = 2.52) reaches about 700°C upon receiving laser light, it is changed to rutile-type titanium oxide (refractive index *n* = 2.76). When brookite-type titanium oxide (refractive index *n* = 2.65) reaches about 700°C, it is changed to rutile-type titanium oxide (refractive index *n* = 2.76). When amorphous titanium oxide reaches about 300°C, it is changed to anatase-type titanium oxide or brookite-type titanium oxide. When amorphous titanium oxide reaches about 700°C, it is changed to rutile-type titanium oxide via anatase-type or brookite-type titanium oxide. More specifically, the change in configuration from an amorphous type to an anatase type or a brookite type can be performed with a relatively small laser power, and the change in configuration from an anatase type or a brookite type to a rutile type can be performed with a laser power higher than the above-mentioned laser power.

It is considered that the change in configuration from a rutile type to an amorphous, anatase, and brookite type also is possible. However, a rutile type cannot be changed directly to an anatase type or a brookite type. Rutile-type titanium oxide first is melted (1800°C or higher) to be amorphous, and thereafter, is changed in configuration to an anatase type or a brookite type. Therefore, in order to change a rutile type to an anatase type or a brookite type, the laser light 8 with a higher laser power is required.

In the recording layer 1, a large change Δn in refractive index occurs along with the above-mentioned change in configuration. For example, in the change in configuration from an anatase type to a rutile type, the change Δn in refractive index is 0.24. When the recording layer 1 of the information recording medium is made of, for example, anatase-type titanium oxide, and titanium oxide is irradiated with laser light to be changed in configuration to a rutile type, minute regions (rutile-type titanium oxide) in which a change in refractive index is caused due to the change in configuration can be set to be the information bits 5. As described above, since the difference in refractive index between the information bit 5 (rutile-type titanium oxide) and the portion (anatase-type titanium oxide) of the recording layer 1 where the information bit 5 are not formed is large, information can be reproduced at a satisfactory SN ratio.

The information bit 5 formed due to the change in configuration from an anatase type or a brookite type to a rutile type is obtained by the change in configuration from a metastable crystal form to a stable crystal form, so that the information bit 5 thus obtained is very stable and is excellent in long-term storage of information. Furthermore, the above-mentioned change in configuration occurs due to laser light with a relatively low power, and still furthermore, the speed of a change in configuration between crystal forms (i.e., a dislocation speed) is relatively high. Thus, if the change in optical constant involved in the above-mentioned change in configuration is used, a write-once information recording medium excellent in recording stability, capable of performing high-speed recording and high-sensitivity recording, can be realized.

Even when the recording layer 1 contains, for example, a mixture of an amorphous form and a crystal form, stable recording with a high sensitivity and a high speed can be performed, as long as it contains titanium oxide of the above-mentioned crystal form (anatase type or brookite type).

It is considered that the information bit 5 containing rutile-type titanium oxide can be changed in configuration to an amorphous type, an anatase type, or a brookite type by irradiation with the laser light 8, as described above. Therefore, an information recording medium allowing for rewritable recording can be realized.

When recording light is condensed onto the recording layer 1, a non-linear phenomenon is induced with a high probability at a focal point with a high optical power density (photon density). The non-linear phenomenon herein refers to a phenomenon in which the absorption sensitivity of the recording layer 1 is not proportional to the energy of radiating light. The non-linear phenomenon includes, for example, those that occur in the case where there is a threshold value for the absorption sensitivity, in the case where two-photon absorption occurs in which the absorption sensitivity has about squared characteristics of light energy, or multi-photon absorption occurs in which the absorption sensitivity has about n-th power characteristics (n is 3 or more), in the case where plasma is generated due to the two-photon absorption or multi-photon absorption, in the case of a combination of these cases, and the like. For example, in the case where two-photon absorption occurs in the recording layer 1 at the focal point of recording light, the recording layer 1 at the focal point absorbs two photons simultaneously, so that the recording layer 1 is irradiated as if it were irradiated with light having a wavelength (predetermined wavelength) that is a half of a recording wavelength. Titanium oxide contained in the recording layer 1 absorbs light with the above-mentioned predetermined wavelength, and titanium oxide is changed in configuration due to the heat generated by the light absorption, whereby the information bit 5 is formed due to the change in optical constant involved in the change in configuration. According to the recording of information using such a non-linear phenomenon, a region where light is absorbed can be made as small as an focused spot, so that the information bit 5 can be formed with a high density.

For example, the absorption edge wavelengths of anatase-type titanium oxide and brookite-type titanium oxide are both 0.388 µm. Therefore, in the case where the recording layer 1 contains anatase-type or brookite-type titanium oxide, for example, when the recording layer 1 is irradiated with a pulse laser having a wavelength of 0.76 µm or less, information can be recorded using a two-photon absorption phenomenon.

Next, reproduction of information from the information recording medium of the present embodiment will be described.

The absorption edge wavelengths of anatase-type titanium oxide and brookite-type titanium oxide are both 0.388 µm, and that of rutile-type titanium oxide is 0.413 µm. Therefore, in the information recording medium in which the recording layer 1 is substantially made of anatase-type titanium oxide or brookite-type titanium oxide, and more information bits 5 (rutile-type titanium oxide) are formed particularly three-dimensionally, it is preferable to use light having a wavelength (e.g., 0.65 µm) longer than the absorption edge wavelength (0.413 µm) of these oxides as reproducing light. The reason for this is that the light loss is small, even when such reproducing light passes through the plurality of recording layers 1.

During reproduction, when light with a wavelength (0.388 µm to 0.413 µm) between the absorption edge wavelength of anatase-type titanium oxide or brookite-type titanium oxide and the absorption edge wavelength of rutile-type titanium oxide (e.g., a semiconductor laser of 0.405 µm) is used, anatase-type titanium oxide and brookite-type titanium oxide are transparent to the semiconductor laser, whereas rutile-type titanium oxide (information bit 5) absorbs the semiconductor laser. If this point is taken advantage of, a reading contrast can be enhanced using a change in refractive index and a change in absorption coefficient. The reproduction of information using a semiconductor laser with the above-mentioned wavelength is not suitable for an information recording medium in which more information bits 5 are formed three-dimensionally, due to the occurrence of light absorption, and is suitable for an information recording medium in which the number of the recording layers 1 is relatively small.

Furthermore, with light having a wavelength of 0.5 µm or less (including 0.405 µm), information can be reproduced from a recording medium on which information is recorded with a high density (e.g., an information recording medium on which the information bits 5 are formed with a high density, using the two-photon absorption phenomenon).

Next, a relationship between the thickness of a recording layer (thickness of either one recording layer selected from the plurality of recording layers 1a to 1f) (see FIG. 1)) and the reflectance thereof is discussed.

In the example shown in FIG 2, the refractive index of the intermediate layer 2 is 1.6, and the wavelength of radiating light is 0.65 µm. The broken line in FIG. 2 represents the reflectance of anatase-type titanium oxide (in a non-recorded state; refractive index *n* = 2.52), and the solid line represents the reflectance of rutile-type titanium oxide (in a recorded state; refractive index *n'* = 2.76). More specifically, the solid line represents the reflectance in the information bit 5 (see FIG. 1).

As shown in FIG. 2, in the information recording medium of the present embodiment, the reflectance that is one kind of an optical constant is changed along with the change in configuration of titanium oxide. Therefore, information can be reproduced using the difference between the reflectance of a non-recorded region (anatase-type titanium oxide) in the recording layer 1 and the reflectance of a recorded region (rutile-type titanium oxide). Furthermore, the reflectance of titanium oxide in the non-recorded region, i.e., the region of the recording layer in which the information bits 5 are not formed, can be used for focusing servo as a focus error signal.

As shown in FIGS. 2A and 2B, the reflectance of the non-recorded region in the recording layer 1 and that of the recorded region (information bit 5) therein change periodically in relation to the thickness thereof. The reflectance of the non-recorded region in the recording layer 1 is large (18%) at a thickness of (*m*-0.5)λ/(2*n*), and the reflectance of the recorded region (information bit 5) in the recording layer is large (25%) at a thickness of (*m*-0.5)λ/(2*n'*), where *m* is an integer.

If the thickness of the recording layer is set so that the difference between the reflectance of the non-recorded region (anatase-type titanium oxide) and the reflectance of the recorded region (rutile-type titanium oxide) is large, information can be reproduced at a satisfactory S/N ratio, which is preferable. For example, in the information recording medium in which the number of recording layers is small (e.g., including 4 to 9 recording layers), the thicknesses of the recording layers may be set to be, for example, about λ/4*n* to λ/4*n'* where a reflectance peak appears. On the other hand, in the information recording medium in which the number of recording layers is large (e.g., including 10 to 50 recording layers), it is preferable that the thicknesses of the recording layers are prescribed to be smaller than the above-mentioned thicknesses, whereby the reflectance of light per layer is reduced, and the ratios of light incident upon the respective layers are approximated. In this case, the thicknesses of the recording layers may be set in a range of, for example, 5 nm to 50 nm, depending upon the number of the layers.

Furthermore, as shown in FIG. 2A, the period of a change in reflectance is varied slightly between the non-recorded region (anatase-type titanium oxide) and the recorded region (rutile-type titanium oxide) (periods are λ/(2*n*) and λ/(2*n'*), respectively). Therefore, in the second period and the third period (i.e., the thickness region where the second mountain-shaped curve is drawn and the thickness region where the third mountain-shaped curve is drawn in FIG. 2A), a contrast or a modulation ratio is larger than that in the thickness region where the first mountain-shaped curve is drawn. Thus, if the thickness of the recording layer is selected from the above-mentioned thickness region where a contrast or a modulation ratio is large, the quality of a reproduced signal can be enhanced.

The region of a thickness *L* where a contrast or a modulation ratio is large is λ/(2*n*) < *L* < 3λ/(4*n'*) in the second mountain-shaped curve, and λ/*n < L* < 5λ/(4*n'*) in the third mountain-shaped curve. *L* denotes the thickness of the recording layer; λ denotes the wavelength of reproducing light, *n'* is the refractive index of a portion (recorded region) where information is recorded in the recording layer, and *n* is the refractive index of a portion (non-recorded region) where information is not recorded in the recording layer. When the thickness of the recording layer is too large, the precision of a film thickness is degraded, so that the thickness of the recording layer desirably is within the above range.

Next, a method for producing an information recording medium of the present embodiment will be described with reference to FIGS. 3A to 3D.

First, the substrate 9 is prepared (see FIG. 3A). The substrate 9 is coated with a coating solution containing titanium oxide, for example, by a method such as spin coating to form the recording layer 1a (see FIG. 3B). Furthermore, the recording layer 1a is coated with a coating solution containing a material for an intermediate layer by a method such as spin coating to form the intermediate layer 2a (see FIG. 3C). Furthermore, the recording layer 1b, the intermediate layer 2b, the recording layer 1c, ..., the recording layer 1f are formed repeatedly. Finally, the recording layer 1f is coated with a coating solution containing a material for the protective layer 4 to form the protective layer 4, or the protective layer 4 is formed on the recording layer 1f by a film formation method or the like (see FIG. 3D).
Thus, the recording layer 1 and the intermediate layer 2 are formed by coating of materials, whereby the information recording medium of the present embodiment can be produced easily at a low cost.

Alternatively, an excess intermediate layer or recording layer is formed, and the excessively formed portion (i.e., a part of the recording portion 3, which is on a light incident side) may be used as the protective layer 4. More specifically, it also may be possible that a layer similar to the intermediate layers 2a to 2e is formed on the recording layer 1f as the protective layer 4, or the recording layer 1f is formed thick, and a part thereof is allowed to function as the protective layer 4. Accordingly, it is not necessary to form the protective layer 4 in a separate step from that of the recording portion 3, and the protective layer 4 can be made of substantially the same material as that for the recording portion.

As the coating solution containing titanium oxide, for example, a suspension can be used in which fine particles (average particle size: 5 nm to 50 nm) of anatase-type titanium oxide or brookite-type titanium oxide are dispersed in a dispersion medium such as water. The crystal of titanium oxide has a crystallographic axis, so that there is polarization anisotropy with respect to a refractive index. However, in the recording layer 1 produced using the above-mentioned suspension in which fine particles of titanium oxide are dispersed, the direction of the crystallographic axis is random, so that polarization anisotropy in the recording layer can be suppressed.

Next, an optical information recording and reproducing apparatus and an information recording and reproducing method of the present embodiment will be described.

As shown in FIG. 4, in an optical head of the optical information recording and reproducing apparatus of the present embodiment, two kinds of light sources 20a, 20b for reproduction and recording are provided. In an optical path from the light sources 20a, 20b to an information recording medium 21, beam splitters 18a, 18b, a collimator lens 16, a focus/track error-signal detecting element 15, a deflecting mirror 12, a spherical aberration correction element 13, and an objective lens 6 are disposed. The light source 20a is a semiconductor laser light source for reproduction with a wavelength of 0.405 µm, and the light source 20b is a semiconductor pulse laser light source for recording, with a wavelength of, for example, 0.76 µm, and a pulse width of, for example, one picosecond to 10 nanoseconds.

In the optical information recording and reproducing apparatus of the present embodiment, the light source for recording and the light source for reproduction are provided separately. However, it also may be possible that one light source is allowed to function as both the light source for recording and the light source for reproduction. In this case, by using a light source with a wavelength of, for example, 650 nm, and allowing the light source to perform pulse oscillation to output laser light having a large peak power during recording and allowing the light source to perform continuous oscillation to output laser light having a small peak power during reproduction, whereby information can be recorded and reproduced with respect to the information recording medium of the present embodiment. Because of this, one light source suffices, which can simplify the configuration of an apparatus.

During recording, laser light 22b emitted from the light source 20b is bent in a Y direction by the beam splitter 18a, is substantially collimated by the collimator lens 16, passes through the focus/track error-signal detecting element 15 of a diffraction type (0-order diffracted light is used), and has an optical path bent in a z direction by the deflecting mirror 12. Then, the laser light 8 bent in the z direction passes through the spherical aberration correction element 13, and is condensed (converged light 7) onto the recording portion 3 of the information recording medium 21 by the objective lens 6, whereby the information bit 5 as shown in FIG. 1 is formed. The information bit 5 is formed using a change in optical constant of the recording layer. In the present embodiment, the information bit 5 is formed using a change in refractive index, a change in reflectance, and the like of the recording layer 1 involved in the change in configuration of titanium oxide.

In the conventional optical information recording and reproducing apparatus for recording information onto an information recording medium, in order to form one information bit 5 with one pulse, a light source capable of emitting a large pulsed laser with a pulse width of about 100 femtoseconds and a peak power of about 100 kW is required as a light source for recording information (light source for emitting recording light). For example, in the optical information recording and reproducing apparatus of the present embodiment for recording information onto the information recording medium of the present embodiment in which recording layers are substantially made of anatase-type titanium oxide, assuming that the recording energy is about 250 pJ to 10 nJ per pulse, a pulse laser with a relatively long pulse width (e.g., 1 picosecond to 5 picoseconds) and a relatively small peak power (e.g., 2 W to 300 W) can be used as a light source for emitting recording light. Thus, by allowing information to be recorded with a relatively low peak power, the configuration of a semiconductor laser that is a light source can be obtained easily. The reason for this is that a light-emitting end face is unlikely to be damaged in the semiconductor laser with a relatively low peak power.

Although the reason why information can be recorded with a low power is not clear, it is considered as follows. In the information recording medium of the present embodiment, instead of information being recorded only by two-photon absorption or multi-photon absorption, a plasma is generated by an intense electric field due to the two-photon absorption or multi-photon absorption, whereby a change in configuration of titanium oxide is induced to promote recording.

During reproduction, the laser light 22a emitted from the light source 20a passes through the beam splitters 18a, 18b, is substantially collimated by the collimator lens 16, passes through the focus/track error-signal detecting element 15 of a diffraction type (0-order diffracted light is used), and has its optical path bent in the z direction by the deflecting mirror 12. Then, the laser light 8 bent in the z direction passes through the spherical aberration correction element 13, and is condensed (converged light 7) onto the recording portion 3 of the information recording medium 21 by the objective lens 6. Light reflected from the information bit 5 formed on the recording layer 1 returns in an opposite direction, passes through the objective lens 6, the spherical aberration correction element 13, and the deflecting mirror 12 in this order, is diverged into a plurality of light beams by the focus/track error-signal detecting element 15 of a diffraction type (1st-order diffracted light is used. In FIG. 4, for simplicity, diverged light is not shown in the optical path from the focus/track error-signal detecting element 15 of a diffraction type to the beam splitter 18b), becomes converged light by the collimator lens 16, and further deflected in a -z direction by the beam splitter 18b. A plurality of diverged light beams 17a to 17c deflected in the -z direction pass through pinholes 14a to 14c of a pinhole array 14, and are detected by photodetectors 19a to 19c.

Furthermore, in the present embodiment, the pinhole array 14 having a plurality of pinholes is placed at a position in the vicinity of a focal point of the entire diverged light beams 17a to 17c. However, separate pinholes may be placed at positions corresponding to respective focal points of the diverged light beams 17a to 17c. By setting the sizes of the pinholes 14a to 14c to be smaller than those of the diverged light beams 17a to 17c, respectively, only light at the center portion of each of the converged light beams 17a to 17c is detected, and unnecessary high-order aberrated light distributed in the vicinity of the circumference of each of the converged light beams 17a to 17c can be removed. Because of this, the S/N of a servo error signal, as well as a reproduced signal can be enhanced.

When the circumferential light of each of the diverged light beams 17a to 17c is eliminated, the light amount is decreased. Therefore, in this case, the signal intensity preferably is increased using an APD (avalanche photodiode) for the photodetectors 19a to 19c. In the case of the information recording medium in which recording layers are provided in a multi-layered configuration, a large amount of light cannot be detected due to the limitation of materials. For this reason, it is preferable to use the APD.

Furthermore, even when the diverged light beams 17a to 17c are detected respectively by the photodetectors 19a to 19c with areas smaller than those of the diverged light beams 17a to 17c, instead of the pinhole array 14, the same effects can be obtained.

Furthermore, the following also may be possible. Only the diverged light beams 17b, 17c corresponding to a track error signal are allowed to pass through the pinholes 14b, 14c of the pinhole array 14, the diverged light beams 17b, 17c are detected by the photodetectors 19b, 19c, and the diverged light beam 17a corresponding to a focus error signal is detected directly by, for example, a quadrant photodetector 19a, without passing through the pinhole. In such an arrangement, for example, an astigmatism method can be used as a focus detection method. Furthermore, when the area of the photodetector 19a is set to be smaller than the cross-sectional area of the diverged light beam 17a at a detection position, high-order aberration components can be reduced.

In the present embodiment, the information bits 5 are successively recorded three-dimensionally in the recording portion 3 in the order not passing through the recorded information bits 5. Because of the recording in such an order, stray light such as scattered light and unnecessary diffracted light, etc. caused by the information bits 5 can be reduced. Specifically, by forming the information bits 5 in the order from the recording layer (recording layer 1a in FIG. 1) placed at a position farthest from the objective lens 6 to the recording layer closest to the objective lens 6, the above-mentioned order can be realized. In the information recording medium shown in FIG. 1, recording may be performed three-dimensionally in the -z direction in such an order as the recording layer 1a, the recording layer 1b, the recording layer 1c, ...At this time, the thickness of the recording layer 1 through which the converged light 7 passes is varied depending upon the recorded depth of the information bit 5. Therefore, it is preferable that recording is performed while the spherical aberration amount is controlled in accordance with the recorded depth by the spherical aberration correction element 13 provided in the optical path between the light sources 20a, 20b and the objective lens 6. Because of this, satisfactory information bits 5 can be formed. As the spherical aberration correction element 13, a liquid crystal element whose refractive index distribution is variable, a beam expander in which a concave lens is combined with a convex lens, and the interval in an optical axis direction between the lenses is rendered variable by an actuator, or the like can be used.

In the case where a non-recorded region of the information bit 5 is present, as long as the converged light 7 does not pass through the recorded information bit 5, the recording order may not always be in the -z direction.

### (Embodiment 2)

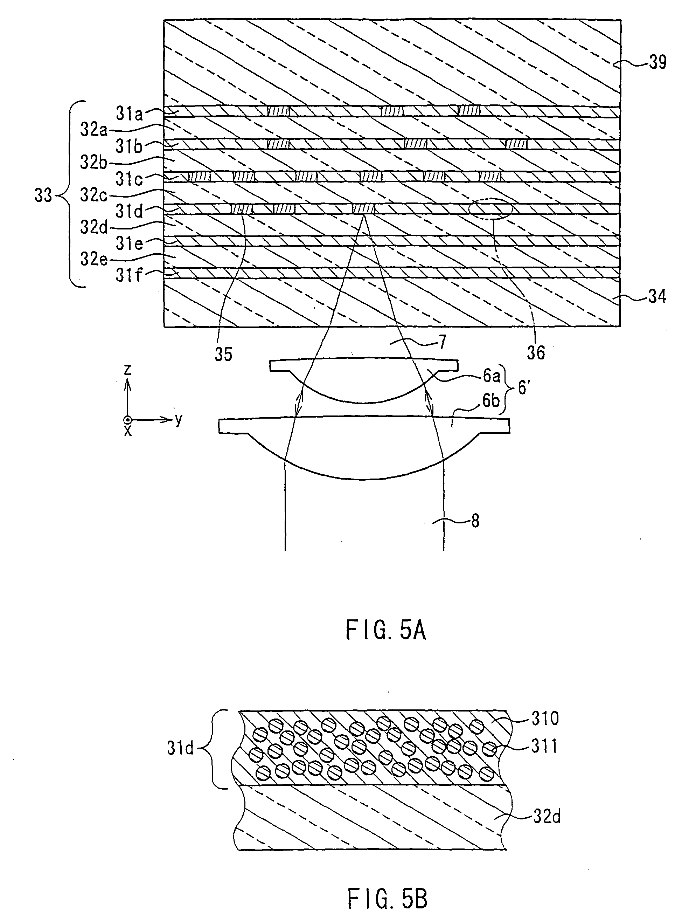

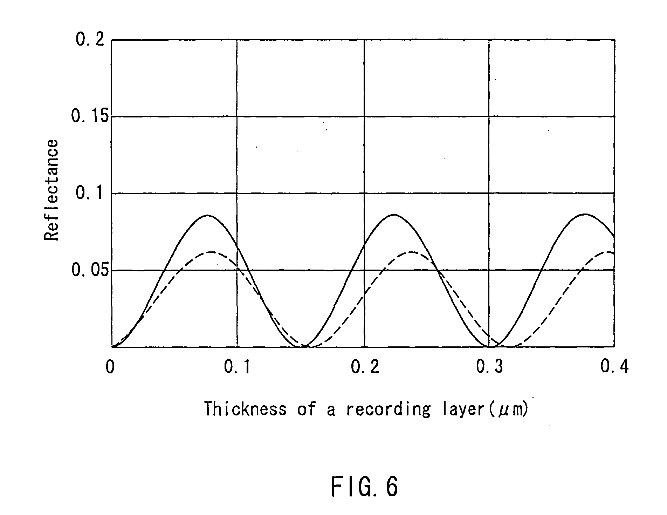

An information recording medium and a method for producing the same of Embodiment 2 according to the present invention will be described with reference to FIGS. 5 and 6. FIG. 5A shows a cross-sectional configuration of an information recording medium and a state where information is recorded/reproduced in the present embodiment. FIG. 5B is an enlarged view of a recording layer of the information recording medium shown in FIG. 5A. FIG. 6 shows a relationship between the thickness and the reflectance of a recording layer of the information recording medium in the present embodiment.

As shown in FIG. 5A, in the information recording medium of the present embodiment, a recording portion 33 and a protective layer 34 are formed on a substrate 39. In FIG. 5A, reference numerals 31a to 31f denote recording layers, and 32a to 32e denote intermediate layers. Hereinafter, an arbitrary recording layer among the recording layers 31a to 31f will be referred to as a recording layer 31, and an arbitrary intermediate layer among the intermediate layers 32a to 32e will be referred to as an intermediate layer 32.

The information recording medium of Embodiment 2 is different from that of Embodiment 1 in that, as shown in FIG. 5B, the recording layer 31 is made of a mixture of titanium oxide 311 and a low refractive-index material 310 having a refractive index smaller than that of the titanium oxide 311, and the titanium oxide 311 is dispersed in a particle form in the low refractive-index material 310. By changing the mixed ratio between the titanium oxide 311 and the low refractive-index material 310 to control the content of the titanium oxide 311 contained in the recording layer 31, the refractive index, and the variation of a refractive index before and after recording in the recording layer can be controlled.

Furthermore, according to the information recording medium of the present embodiment, the recording sensitivity is enhanced compared with the conventional information recording medium. The reason for this is considered as follows. The average particle size of the titanium oxide 311 is smaller than 1/4 of the wavelength (e.g., 0.405 µm) of incident light (for example, fine particles of 5 nm to 50 nm), whereby a non-linear phenomenon is induced easily due to the quantum size effect, and the unique effect of fine particles that the impurity level on the surface of the fine particles is increased, resulting in a satisfactory heat-exchange efficiency.

It is preferable that the average particle size of the titanium oxide 311 is smaller than the wavelength of incident light (recording light and reproducing light). The purpose of this is to suppress a light loss due to a diffraction loss of recording light and reproducing light due to the particles of titanium oxide 311. In particular, it is preferable that the average particle size of the titanium oxide 311 is set to be 1/4 or less of the wavelength of incident light (recording light and reproducing light). The reason for this is that a scattering loss as well as a diffraction loss can be suppressed to decrease the light loss of recording light and reproducing light. Furthermore, it is preferable that the average particle size of the titanium oxide 311 is set to be 1/10 or less of the wavelength of incident light (recording light and reproducing light). The reason for this is that a scattering loss can be decreased further.

It is preferable that the fine particles of the titanium oxide 311 are contained in the recording layer in an amount of 5wt% to less than 100wt%. In the case where the recording layer 31 is a thin film of, for example, about 1 µm or less, if 5wt% or more of the titanium oxide 311 is contained in the recording layer 31, the recording sensitivity at a practical level can be realized in the recording layer 31.

The low refractive-index material 310 may be any of resin or an inorganic material, as long as it is substantially transparent to recording light and reproducing light. Herein, the low refractive-index material 310 being substantially transparent to recording light and reproducing light means that the material transmits components except for scattered components of recording light and reproducing light substantially without absorbing them. More specifically, the absorptivity per recording layer preferably is, for example, 1% or less, and more preferably 0.1% or less.

In the case of using resin as the low refractive-index material 310, it is preferable that the intermediate layer 32 is made of substantially the same material as that for the low refractive-index material 310. Furthermore, it is preferable that the protective layer 34 is made of substantially the same material as that for the low refractive-index material 310. The reason for this is that the cost of the information recording medium can be decreased, and a chemical reaction (e.g., erosion and the like) can be suppressed from occurring on interfaces between the intermediate layer 32 and the recording layer 31, and between the protective layer 34 and the recording layer 31. Herein, the same material means a material of the same kind, and for example, materials having different molecular weights due to a difference in polymerization degree are considered as the same materials.

Furthermore, in the case of using resin as the low refractive-index material 310, there is an effect of enhancing the sensitivity of recording and reproduction due to its heat insulation effect. As the resin, for example, those which have a refractive index of about 1.5, such as PMMA, photopolymer resin, UV-curable resin, polyester, or the like, can be used.

As the inorganic material, for example, SiO₂, CaO₂, MgF, or the like can be used. In the case where the recording layer 31 (non-recorded state) contains anatase-type or brookite-type titanium oxide, when at least one kind of inorganic material or the like selected from the group consisting of SiO₂, CaO₂, and MgF is used, the recording layer can be stabilized, which is preferable. The reason for this is as follows. The anatase-type or brookite-type titanium oxide 311 has a photocatalytic function, so that an organic material may be decomposed by irradiation with UV-light, while an inorganic material is not decomposed.

The substrate 39, the protective layer 34, and the intermediate layer 32 have the same functions as those of the substrate 9, the protective layer 4, and the intermediate layer 2 in the information recording medium of Embodiment 1, and can be made of the same materials as those in Embodiment 1. The recording layer 31 may contain 50wt% of fine particles of the titanium oxide 311 having an average particle size of 5 nm to 50 nm, and 50wt% of the low refractive-index material 310.

Next, recording of information with respect to the information recording medium of the present embodiment will be described.

In the information recording medium of the present embodiment, as in the recording layer 1 of the information recording medium of Embodiment 1, a non-linear phenomenon such as two-photon absorption is induced at a focal point in the recording layer 31, and the titanium oxide 311 contained in the recording layer 31 absorbs light with a predetermined wavelength.
When the titanium oxide 311 absorbs light to reach a predetermined temperature, the titanium oxide 311 is changed in configuration, and an information bit 35 is formed due to the change in optical constant involved in the change in configuration of the titanium oxide 311.

The low refractive-index material 310 is unlikely to be changed even upon receiving recording light, for example, in the case where the low refractive-index material 310 is SiO₂ or the like having a high melting point. However, in the case where the low refractive-index material 310 is resin, it is likely to be thermally deformed upon receiving recording light, whereby the information bit 35 is formed by the deformation of the low refractive-index material 310 in combination with the change in configuration of titanium oxide.

Regarding the recording of information with respect to the information recording medium of the present embodiment, which is similar to the case of Embodiment 1, if recording energy of recording light is set to be about 250 pJ to 10 nJ per pulse, in the same way as in Embodiment 1, it is preferable that the peak power is, for example, about 2 W to 300 W, and the pulse width is, for example, 1 picosecond to 5 nanoseconds.

Next, the relationship between the thickness of the recording layer 31 (thickness (see FIG. 5A) of either one recording layer selected from the plurality of recording layers 31a to 31f) and the reflectance thereof will be described with reference to FIG. 6. In the example shown in FIG. 6, the refractive index of the intermediate layer 32 is 1.6, and the wavelength of radiating light is 0.65 µm. The broken line in FIG. 6 represents the reflectance of a non-recorded region (refractive index n = 2.06) of the recording layer 31 containing 50wt% of anatase-type titanium oxide and 50wt% of low refractive-index material (SiO₂), and the solid line represents the reflectance of the recorded region (if a refractive index *n'* = 2.16, and anatase-type titanium oxide is entirely changed to rutile-type titanium oxide, the recorded region contains 50wt% of rutile-type titanium oxide and 50wt% of a low refractive-index material (SiO₂). More specifically, the solid line represents the reflectance in the information bit 5 (see FIG. 5).

As shown in FIG. 6, the reflectance of 6% can be obtained in the non-recorded region, and the reflectance of 8% can be obtained in the recorded region. If the weight ratio of the low refractive-index material in the recording layer is increased, a refractive index is decreased, so that a peak value of a reflectance also is decreased. For example, in the information recording medium with a relatively small number of recording layers (e.g., including 4 to 9 recording layers), the quality of a reproduced signal becomes more satisfactory by decreasing the weight ratio of the low refractive-index material 310 to enhance a reflectance. In the information recording medium with a large number of recording layers (e.g., including 10 to 50 recording layers), it is preferable to increase the weight ratio of the low refractive-index material 310 to reduce the light loss per layer.

In the method for producing an information recording medium of the present embodiment, it also is preferable that each layer is formed by coating of a material, in the same way as in the case of Embodiment 1. The reason for this is that each layer can be produced easily at a low cost. The recording layer 31 containing fine particles of the titanium oxide 311 and the low refractive-index material 310 may be formed by, for example, coating of a suspension (coating solution) in which fine particles of the titanium oxide 311 with an average particle size of 5 nm to 50 nm and the low refractive-index material 310 are dispersed in water, toluene, isopropyl alcohol, or the like (see FIG. 5).

Furthermore, even in the case of recording and reproducing information with respect to the information recording medium of the present embodiment, the optical information recording and reproducing apparatus shown in FIG. 4 can be used. The recording and reproducing method also is the same as that of Embodiment 1.

### (Embodiment 3)

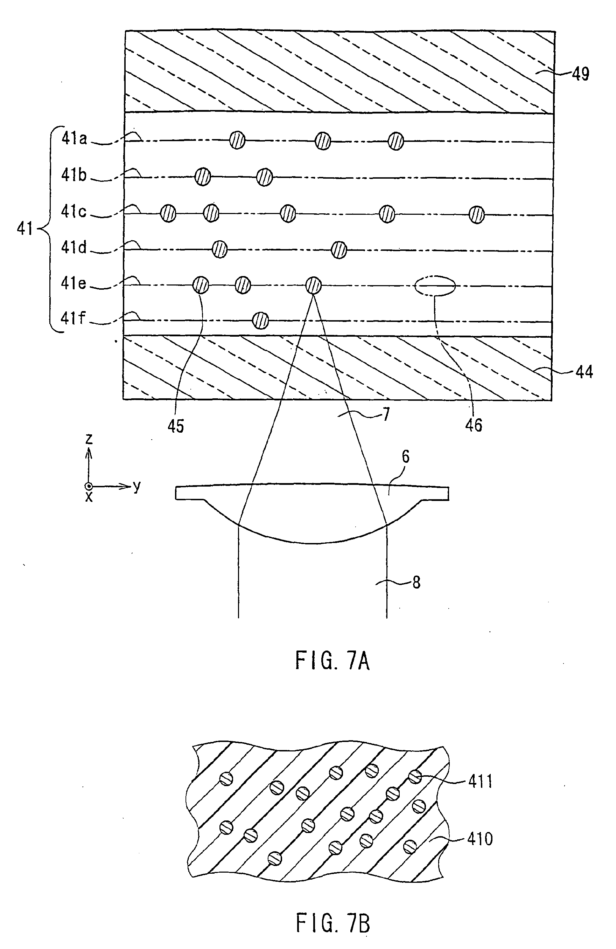

An information recording medium and a method for producing the same of Embodiment 3 according to the present invention will be described with reference to FIG. 7. FIG. 7A shows a cross-sectional configuration of the information recording medium and a state where information is recorded/reproduced in the present embodiment. FIB. 7B shows a recording layer of the information recording medium shown in FIG. 7A.

As shown in FIG. 7A, in the information recording medium of the present embodiment, a recording portion 41 and a protective layer 44 are formed on a substrate 49. The information recording medium of the present embodiment is different from those of Embodiments 1 and 2 in that the entire recording portion 41 functions as a recording layer. Information bits 45 are recorded on substantially the same plane in the recording layer (recording portion 41), and a plurality of recording surfaces (41a to 41f) are provided in the recording layer (recording portion 41), whereby information is recorded three-dimensionally.

In the information recording medium of the present embodiment, as shown in FIG. 7B, the recording layer 41 has a configuration in which fine particles of titanium oxide 411 are dispersed in a low refractive-index material 410. The fine particles of the titanium oxide 411 have the same property and function as those of the fine particles of the titanium oxide 311 contained in the recording layer 311 of the information recording medium described in Embodiment 2. In the information recording medium of the present embodiment, it is preferable that the content of the titanium oxide 411 is 0.3wt% to 10wt%. The reason for this is that the recording sensitivity is enhanced at a content of 0.3wt% or more, and a scattering loss is suppressed to enhance a light use efficiency at a content of 10wt%. The low refractive-index material 410 has the same property and function as those of the low refractive-index material 310 contained in the recording layer 31 of the information recording medium of Embodiment 2, and can adopt the same material as that of Embodiment 2. In the case where the substrate 49 and the protective layer 44 are formed of the same material as that for the low refractive-index material 410 contained in the recording layer 41, the material can be managed easily, and they can be produced at a low cost. Furthermore, a chemical reaction (e.g., erosion and the like) can be suppressed from occurring at an interface between the protective layer 44 and the recording layer (recording portion 41).

Regarding the recording of information with respect to the information recording medium of the present embodiment, which is similar to the case of Embodiment 1, if recording energy of recording light is set to be about 250 pJ to 10 nJ per pulse, in the same way as in Embodiment 1, it is preferable that the peak power is, for example, about 2 W to 300 W, and the pulse width is, for example, 1 picosecond to 5 nanoseconds.

As a method for producing the information recording medium of the present embodiment, in the same way as in Embodiment 2, there are a method for forming an information recording medium by coating the substrate 49 with a coating solution containing fine particles of the titanium oxide 411 and the low refractive-index material 410, and a method for forming the recording layer 41 (recording portion) at a time by injection molding. According to these methods, an information recording medium can be produced easily at a low cost.

Furthermore, even in the case of recording and reproducing information with respect to the information recording medium of the present embodiment, the optical information recording and reproducing apparatus shown in FIG. 4 can be used.

The embodiments of the present invention have been described in Embodiments 1 to 3. However, the present invention is not limited thereto. The information recording medium and the method for producing the same, and the configuration of the optical information recording and reproducing apparatus of each embodiment can be combined, with the same effects being obtained. Furthermore, the information recording medium and the optical information recording and reproducing apparatus of the present invention also include a rewritable type as well as a write-once type.

Furthermore, in Embodiments 1 to 3, an optical disk has been exemplified as the information recording medium. However, a card-shaped, drum-shaped, and tape-shaped product also can be used as the information recording medium within the scope of the present invention.

The objective lens and collimator lens used in the above-mentioned embodiments are thus called for convenience, and they are the same as a general lens.

### (Example)

Next, one example of the information recording medium of the present embodiment will be described. The information recording medium of the present example is an example of the information recording medium shown in FIG. 1 described in Embodiment 1.

On the substrate 9 made of polycarbonate having a thickness of 1.1 mm with track grooves (grooves with a pitch of 0.32 µm and a groove depth of 0.2 µm) formed thereon, a recording layer (thickness: 0.01 µm) and an intermediate layer (thickness: 3 µm) were formed alternately by spin coating to form the recording portion 3 (recording layers 1a to 1f, and intermediate layers 2a to 2e), and the protective layer 4 made of polycarbonate with a thickness of 75 µm was formed. The recording layers 1a to 1f are substantially made of anatase-type titanium oxide, and the intermediate layers 2a to 2e are made of UV-curable resin.

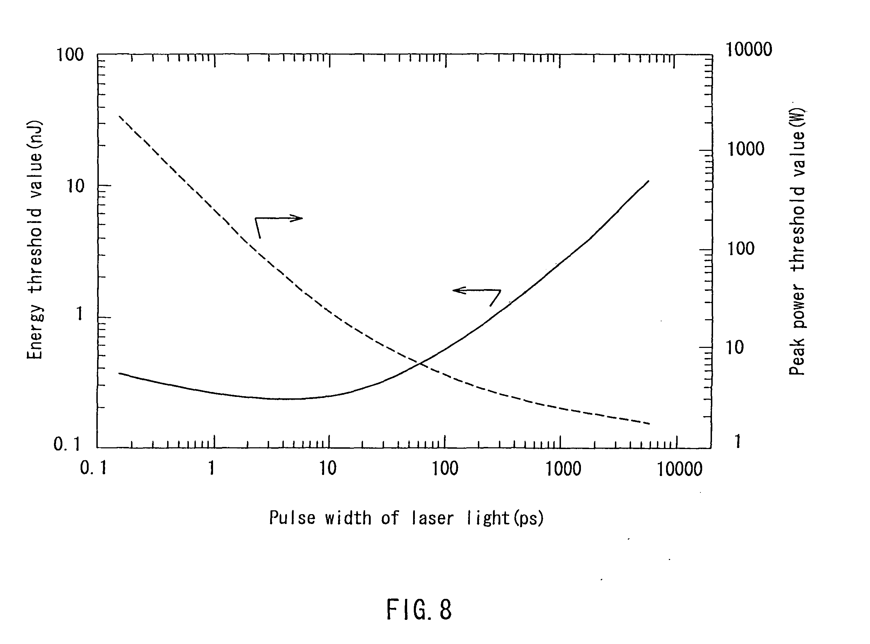

FIG. 8 shows the results obtained by irradiating the information recording medium of the present example with pulse laser light having a wavelength of 650 nm with a varying pulse width, and measuring an energy threshold value and a peak power threshold value during one bit recording. There was a tendency for the threshold value of a peak power for-recording one bit to an information recording medium to decrease as the pulse width of pulse laser light becomes longer. The peak power threshold value was suppressed to 300 W or less by setting the pulse width to be 1 picosecond or more. When the pulse width was set to be 5 nanoseconds, information bits were formed with a peak power threshold value of 2 W.

On the other hand, the energy threshold value required for recording of 1 bit was lowest (250 nJ) with respect to laser light of 1 picosecond to 10 picoseconds, and because of this, there was a tendency for the pulse width to increase gradually. By setting the pulse width to be 5 nanoseconds or less, the energy threshold value was suppressed to 10 nJ or less.

### Industrial Applicability

According to the optical information recording medium, the method for producing the same, and the optical information recording and reproducing apparatus of the present invention, a recording sensitivity is enhanced, and unlike the conventional example, one information bit can be formed with one pulse even without using laser light having a very high peak power. Thus, an information recording medium and an optical information recording and reproducing apparatus capable of performing recording with a high sensitivity and a high speed can be provided.

## Claims

1. An information recording medium comprising a recording portion capable of storing information three-dimensionally,
wherein the recording portion includes at least one recording layer, and
the recording layer contains titanium oxide.

2. The information recording medium according to claim 1, wherein the titanium oxide is at least one kind of an amorphous form and a crystal form, and the crystal form is at least one kind selected from the group consisting of an anatase type, a brookite type, and a rutile type.

3. The information recording medium according to claim 1, wherein the titanium oxide is at least one kind selected from the group consisting of an anatase type and a brookite type.

4. The information recording medium according to claim 1, wherein the recording layer is substantially made of titanium oxide.

5. The information recording medium according to claim 1, wherein the recording layer contains the titanium oxide and a low refractive-index material having a refractive index smaller than that of the titanium oxide.

6. The information recording medium according to claim 5, wherein the recording layer contains 5wt% to less than 100wt% of the titanium oxide.

7. The information recording medium according to claim 5, wherein the titanium oxide is in a particle form, and an average particle size of the titanium oxide is shorter than a wavelength of recording light and a wavelength of reproducing light.

8. The information recording medium according to claim 7, wherein an average particle size of the titanium oxide is shorter than 1/4 of the wavelength of the recording light and the wavelength of the reproducing light.

9. The information recording medium according to claim 5, wherein the low refractive-index material is resin.

10. The information recording medium according to claim 5, wherein the low refractive-index material is an inorganic material.

11. The information recording medium according to claim 1, comprising a plurality of the recording layers, wherein the recording portion further includes a plurality of intermediate layers that are substantially transparent to recording light and reproducing light, and the recording layers and the intermediate layers are stacked alternately.

12. The information recording medium according to claim 1, further comprising a protective layer substantially transparent to recording light and reproducing light, wherein the protective layer is placed on a light incident side of the recording portion.

13. The information recording medium according to claim 5, further comprising a protective layer substantially transparent to recording light and reproducing light, wherein the protective layer is placed on a light incident side of the recording portion, and made of the same material as that for the low refractive-index material.

14. The information recording medium according to claim 11, wherein the recording layer contains the titanium oxide, and a low refractive-index material having a refractive index smaller than that of the titanium oxide, and the intermediate layer is made of the same material as that for the low refractive-index material.

15. The information recording medium according to claim 1, wherein information is recorded in a part of the recording layer, and assuming that a wavelength of reproducing light for reproducing the information is λ, a refractive index of a portion of the recording layer where the information is recorded is *n'*, and a refractive index of a portion of the recording layer where the information is not recorded is *n,* a thickness *L* of the recording layer satisfies relationships: λ/(2*n*) < *L* < 3λ/(4*n'*), or λ/*n* < *L* < 5λ/(4*n'*).

16. A method for producing an information recording medium including a recording portion capable of storing information three-dimensionally, the recording portion including at least one recording layer, and the recording layer containing titanium oxide, the method comprising the step of
forming the recording layer by coating of a coating solution containing titanium oxide.

17. The method for producing an information recording medium according to claim 16, further comprising the step of forming an intermediate layer by coating of a coating solution made of a material substantially transparent to recording light and reproducing light,
wherein the step of forming the recording layer and the step of forming the intermediate layer are repeated alternately in a predetermined order by a predetermined number.

18. An optical information recording and reproducing apparatus for recording and reproducing information with respect to an information recording medium including a recording portion capable of storing information three-dimensionally, the recording portion including at least one recording layer, and the recording layer containing titanium oxide, the apparatus comprising:
a light source for emitting recording light;
a light source for emitting reproducing light;
an objective lens for condensing light emitted from the light source for emitting the recording light and the light source for emitting the reproducing light onto the information recording medium; and
a photodetector for detecting light reflected from the information recording medium,
wherein information is recorded in the recording portion using a change in optical constant of the titanium oxide caused by a change in configuration of the titanium oxide, and the information is reproduced using the change in optical constant of the titanium oxide.

19. The optical information recording and reproducing apparatus according to claim 18, wherein the light source for emitting the recording light is a pulse laser light source, and a pulse width is 1 picosecond to 5 nanoseconds.

20. The optical information recording and reproducing apparatus according to claim 18, wherein a peak power of the light source for emitting the recording light is 2W to 300 W.

21. The optical information recording and reproducing apparatus according to claim 18, wherein an information bit is formed in the recording portion of the information recording medium using a non-linear absorption phenomenon.

22. The optical information recording and reproducing apparatus according to claim 21, wherein the non-linear phenomenon includes two-photon absorption or multi-photon absorption.

23. The optical information recording and reproducing apparatus according to claim 18, wherein an information bit is recorded three-dimensionally in the recording portion of the information recording medium, in such an order not passing through an information bit recorded in the recording portion.

24. The optical information recording and reproducing apparatus according to claim 23, wherein an information bit is recorded successively from a position farther away from an objective lens in the recording portion to a position close to the objective lens.

25. The optical information recording and reproducing apparatus according to claim 18, wherein the light source for emitting the recording light and the light source for emitting the reproducing light are the same.

26. The optical information recording and reproducing apparatus according to claim 18, wherein a wavelength of the light source for emitting the reproducing light is 0.388 µm to 0.413 µm.

27. The optical information recording and reproducing apparatus according to claim 18, wherein the change in configuration of the titanium oxide is a change from an anatase type or a brookite type to a rutile type.

28. The optical information recording and reproducing apparatus according to claim 18, wherein the change in configuration of the titanium oxide is a change from an amorphous type to an anatase type, a brookite type, or a rutile type.
